(19) Europäisches Patentamt / European Patent Office / Office européen des brevets

(11) **EP 2 593 860 B1**

(12) **EUROPEAN PATENT SPECIFICATION**

(45) Date of publication and mention
of the grant of the patent:
**19.08.2020  Bulletin 2020/34**

(21) Application number: **11733768.3**

(22) Date of filing: **11.07.2011**

(51) Int Cl.:
*G06F 9/30* (2018.01)          *G06F 9/38* (2018.01)
*G06F 1/3203* (2019.01)          *G06F 1/3287* (2019.01)
*G06T 13/20* (2011.01)          *G06F 9/50* (2006.01)
*G06T 15/00* (2011.01)

(86) International application number:
**PCT/US2011/043509**

(87) International publication number:
**WO 2012/009252 (19.01.2012 Gazette 2012/03)**

(54) **DYNAMIC ENABLING AND DISABLING OF SIMD UNITS IN A GRAPHICS PROCESSOR**

DYNAMISCHE AKTIVIERUNG UND DEAKTIVIERUNG VON SIMD-EINHEITEN BEI EINEM
GRAFISCHEN PROZESSOR

COMMANDE DYNAMIQUE DE SIMD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2010  US 363856 P
20.07.2010  US 839962**

(43) Date of publication of application:
**22.05.2013  Bulletin 2013/21**

(73) Proprietor: **Advanced Micro Devices, Inc.
Santa Clara, CA 95054 (US)**

(72) Inventors:
• **SHAH, Tushar, K.**
**Orlando**
**FL 32817 (US)**
• **OREIFEJ, Rashad**
**Orlando**
**FL 32828 (US)**
• **MANTOR, Michael, J.**
**Orlando**
**FL 32825 (US)**
• **EMBERLING, Brian**
**Palo Alto, CA 94306 (US)**

(74) Representative: **Robinson, David Edward
Ashdown et al
Marks & Clerk LLP
1 New York Street
Manchester M1 4HD (GB)**

(56) References cited:
WO-A1-2009/091369     WO-A1-2009/120427
WO-A2-2005/088443     US-A- 5 452 401
US-A1- 2007 074 054     US-A1- 2007 234 077
US-A1- 2009 328 055     US-A1- 2010 037 038
US-A1- 2010 174 923

• WILSON W. L. FUNG ET AL: "Dynamic warp
formation", ACM TRANSACTIONS ON
ARCHITECTURE AND CODE OPTIMIZATION, vol.
6, no. 2, 1 June 2009 (2009-06-01), pages 1-37,
XP55010433, ISSN: 1544-3566, DOI:
10.1145/1543753.1543756

**Description**

BACKGROUND

Field of the Invention

Embodiments of the present invention generally relate to control of single instruction multiple data (SIMD) units in graphics processing units (GPUs).

Background Art

A math unit of a graphics processor includes arithmetic logical units (ALUs) or math units configured to perform integer, logical and single/double precision floating point operations.

Graphics processors can include an array of such math units, known as a shader core. A shader core includes a shader pipeline (SP). To achieve higher performance, multiple SPs can be configured to work together as stacked SPs. SPs can be structured as an array of quad pipes (QPs) and SIMDs. All shader units of each SIMD can conditionally execute an identical ALU instruction on different sets of primitive, vertex, or pixel values. In this way, SIMDs provide mathematical processing power to a graphics processor.

In conventional graphics processors having stacked SPs, SIMDs can be enabled or disabled statically. For example, if a SP was determined to be faulty, a fuse mask can be programmed to disable the faulty SP. Similarly a user accessible register can be programmed to disable/enable a specific SIMD or group of SIMDs. However, such methods require flushing of a graphics pipe of the graphics processor and reprogramming of new values into the flushed graphics pipe before sending new work requests to the SIMDs.

A common assumption is that shader engine performance will increase with a corresponding increase in the number of SIMDs. This statement is only true, however, in limited circumstances, such as during heavy workload conditions. For a less heavy load scenario, which is frequently the case, the performance of the shader engine may not necessarily increase as the number of SIMDs increases. In these situations, if all the SIMDs are enabled, power is wasted because underutilized SIMDs (i.e., SIMDs with lighter or no workloads) remain enabled and active.

Conventional graphics systems simply divide the workload across all of the SIMDs within the shader engines used for a particular operation. This approach, however, is extremely power-inefficient. The inefficiency occurs because there is no determination of whether fewer SIMDs could be used to perform the operation without compromising system performance. Thus, conventional systems keep all of the SIMDs within the shader engine active regardless of whether they are required to perform the operations.

As noted above, when SIMDs are enabled, they consume power. Even in an idle state, SIMDs still consume a minimal, but measurable, amount of power. Thus, keeping all available SIMDs enabled, even if unused or underutilized, wastes power. It would also be beneficial to be able to compact the workload in as minimum number of SIMDs as possible. This approach reduces unnecessary overhead of presenting the workload to every available SIMD.

Furthermore, in conventional approaches, clocking of all SIMD units in a shader complex is either enabled or disabled simultaneously. In many applications, not all SIMDs are assigned work. However, conventional approaches continue to actively provide clocking signals to such SIMDs. This approach can increases power consumption of a graphics processor and is inefficient.

Accordingly, systems and methods are needed that enable dynamic control of SIMDs and reduce power consumption of a graphics processor when SIMDs may not be performing processing tasks.

WO/2009/091369 discloses determining a required power level for a processing application; and dynamically enabling and disabling one or more single instruction multiple data units, SIMDs, in a shader complex based on said power level. WO2005/088443 discloses methods and apparatus for monitoring processor tasks and associated processor loads therefor that are allocated to be performed by respective sub-processing units associated with a main processing unit; re-allocating at least some of the tasks based on their associated processor loads such that at least one of the sub-processing units is not scheduled to perform any tasks; and commanding the sub-processing units that are not scheduled to perform any tasks into a low power consumption state.

BRIEF SUMMARY OF EMBODIMENTS OF THE INVENTION

The invention is in the method of Claim 1, the corresponding system of Claim 6 and the corresponding non-transitory computer-readable medium of Claim 8.

Embodiments of the present invention enable power saving in a graphics processing unit by dynamically activating and deactivating individual SIMDs in a shader complex that comprises multiple SIMDs. On-the-fly dynamic disabling and enabling of individual SIMDs provides flexibility in achieving a required performance and power level for a given processing application. In this way, optimal usage of the graphics processing unit can be achieved.

There is also described a load balancing per watt technique (LBPW). In one implementation, this LBPW technique monitors the number of arithmetic logic unit (ALU) instructions and fetch instructions executed within each S1MD. Additionally, newly assigned thread loads (i.e. wavefronts) are queued and are monitored. This monitoring is used to assess current and future utilization of the SIMDs. Under this scheme, only SIMDs that are actually needed or predicted to process a given workload within the shader engine, remain activated. SIMDs that are not needed are deactivated. By deactivating unneeded SIMDs, power consumption is reduced. As an additional benefit, the embodiments of the present invention improve performance per watt without significantly compromising system performance.

There is also described, di/dt within the graphics chip is reduced to increase reliability and improve frequency at lower voltages. Such reduction affects bill of materials and permits the use of cheaper components.

There is also described dynamic grain (e.g., medium grain) clock gating of SIMDs in a shader complex. Switching power is reduced by shutting down clock trees to unused logic by providing a clock on demand mechanism. In this way, clock gating is enhanced to save more switching power for the duration of time when SIMDs are idle (or assigned no work).

Embodiments of the present invention can be used in any computing system (e.g., a conventional computer (desktop, notebook, etc.) system, computing device, entertainment system, media system, game systems, communication device, personal digital assistant), or any system using one or more processors.

Embodiments of the present invention, for example, may be used processing systems having multi-core CPUs, GPUs, and/or GPGPUs, because code developed for one type of processor may be deployed on another type of processor with little or no additional effort. For example, code developed for execution on a GPU, also known as GPU kernels, can be deployed to be executed on a CPU, using embodiments of the present invention.

BRIEF DESCRIPTION OF THE DRAWINGS/FIGURES

The accompanying drawings, which are incorporated in and constitute part of the specification, illustrate embodiments of the invention and, together with the general description given above and the detailed description of the embodiment given below, serve to explain the principles of the present invention. In the drawings:

FIG. 1A illustrates a shader complex, according to an embodiment.
FIG.s 1B-1D are registers that can be configured to control SIMDs, according to an embodiment.
FIG. 2 illustrates an exemplary timing diagram, according to an embodiment.
FIG.s 3A-3B illustrate exemplary register settings for enabling and disabling SIMDs, according to an embodiment.
FIG. 3C is a flowchart illustrating an exemplary operation, according to an embodiment.
FIGs. 4A-4F illustrate exemplary performance plots, according to embodiments.
FIG. 5A is a graphical illustration of conventional SIMD load behavior without balancing.
FIG. 5B is a graphical illustration of SIMD load behavior in accordance with an embodiment of the present invention.
FIG. 6 is an illustration of an exemplary programmable lookup table for assessing SIMD activity in accordance with embodiments of the present invention.
FIG. 7 is an exemplary flowchart of an exemplary method for performing SIMD load-balancing, in accordance with the present invention.
FIG. 8 is a more detailed flowchart for performing first in first out (FIFO) sampling shown in FIG. 7.
FIG. 9 is a more detailed flowchart of method steps shown in FIG. 7.
FIG. 10 illustrates an exemplary system for dynamic grain clock gating, according to an embodiment.

DETAILED DESCRIPTION OF EMBODIMENTS OF THE INVENTION

As discussed above, embodiments of the present invention enable power saving by dynamically activating and deactivating individual SIMDs in a shader complex.

Embodiments dynamically disable SIMDs for either reduced performance needs or to lower thermal design power (TDP) of a graphics processing unit. Furthermore, embodiments enable disabled SIMDs for high performance applications without having to flush a graphics pipe of the graphics processing unit. This is achieved by dynamically switching a number of SIMDs without flushing the SP. Dynamic control (or switching) is achieved, in part, by programming a set of registers appropriately.

In an embodiment, a shader pipe interpolator (SPI) assigns new work (or threads) based on registers that are configured dynamically to indicate which SIMDs are activated. In an embodiment, such dynamic configurations would take effect after current in-flight requests (or pending requests) are serviced by SIMDs that are to be disabled. Once disabled, no new requests from the SPI will go through to the disabled SIMDs and clocks of harvestable logic (e.g., sp4-vsp and texture clocks) are shut-off to reduce TDP of the graphics processing unit. When the disabled SIMDs are enabled, the SPI will again start allocating work to the enabled SIMDs providing higher performance of the graphics processing unit.

In an embodiment, activation and deactivation of the SIMDs and a number of SIMDs to be activated/deactivated is dependent on various factors such as operating conditions (e.g., temperature, current, CAC), applications (e.g., variable utilization to conserve energy), work load, or other requirements (e.g., performance needs, power needs).

### *Dynamic Control of SIMDs*

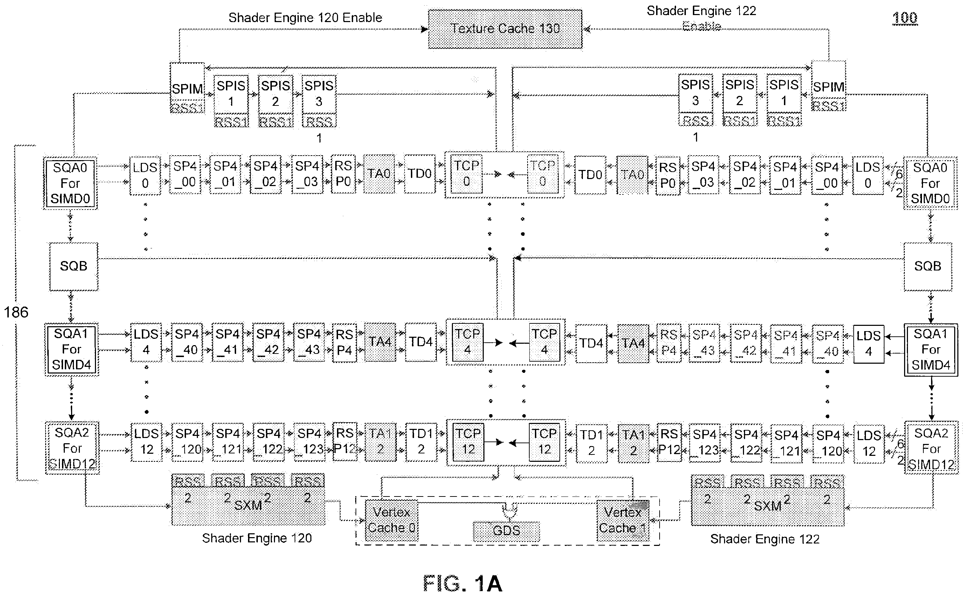

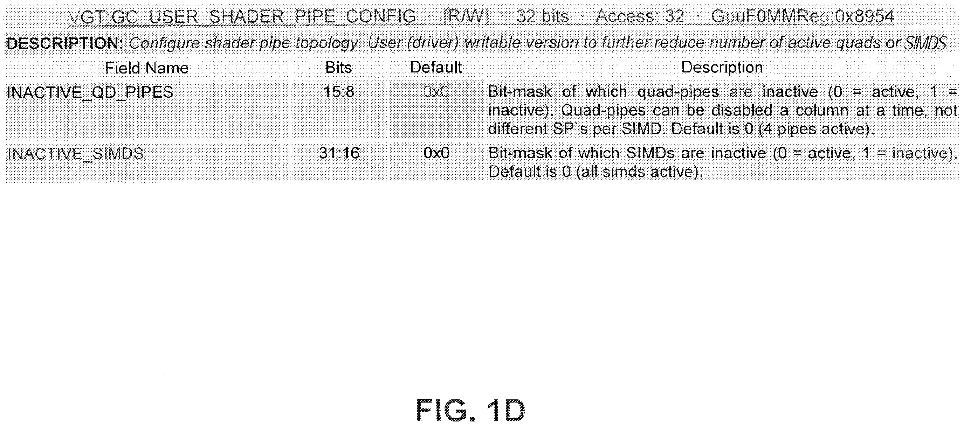

FIG. 1A illustrates an exemplary shader complex 100, in which embodiments of the present invention are implemented. As discussed above, a shader complex can include a shader pipeline (SP). To achieve higher performance, multiple SPs can be configured to work together as stacked SPs. SPs can be structured as an array 186 of quad pipes (QP) and SIMDs. All shader units of each SIMD can conditionally execute an identical ALU instruction on different sets of primitive, vertex, or pixel values. In an embodiment, shader complex 100 includes a plurality of SIMDs and two shader engines, namely, shader engine 120 and shader engine 122. Shader complex 100 also includes texture cache 130 (or a level 2 texture cache), a plurality of shader pipe interpolators (SPIs) and vertex caches. Also included in shader complex 100 are a plurality of redundant shader switches (RSS), shader sequencers (SQ), level 1 texture caches (TCPs) and texture data logic (TD). (Although a lesser number of SIMDs are shown for clarity, it is to be appreciated that the invention is not limited to the illustrated embodiment and that shader complex 100 is scalable and can include any number of SIMDs.)

As discussed above, embodiments of the present invention dynamically switch a number of SIMDs without flushing the SP. Such dynamic control (or switching) is achieved, in part, by programming a set of registers appropriately. In an embodiment, an SPI assigns new work (or work threads) based on registers that are configured dynamically to indicate which SIMDs are activated.

The following section discusses exemplary registers that control the SIMD and QP masks.

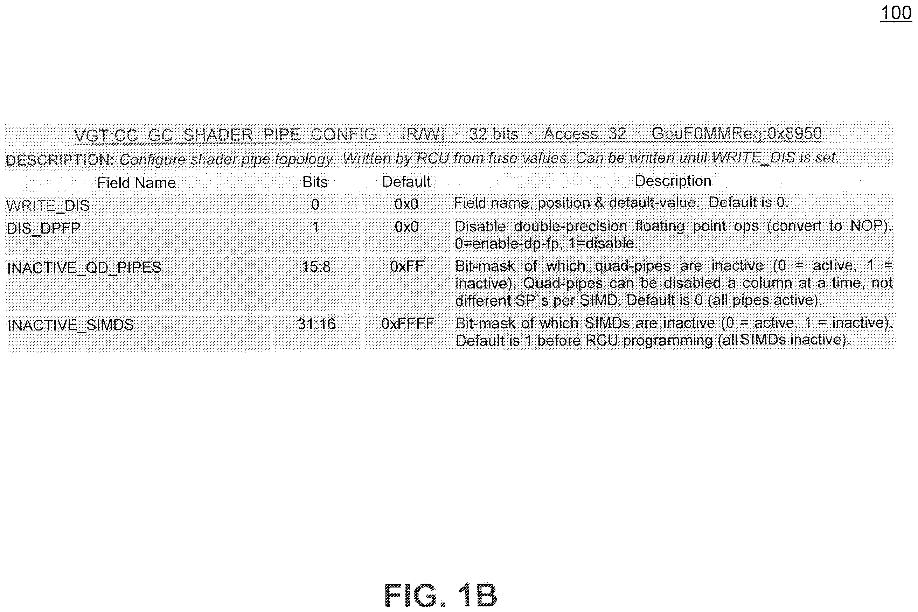

FIG. 1B illustrates a register named as "CC_GC_SHADER_PIPE_CONFIG." In an embodiment, this register is programmed by a reset/configuration unit (RCU) based on fuse mask settings. As an example, this register can be programmed for harvesting purposes.

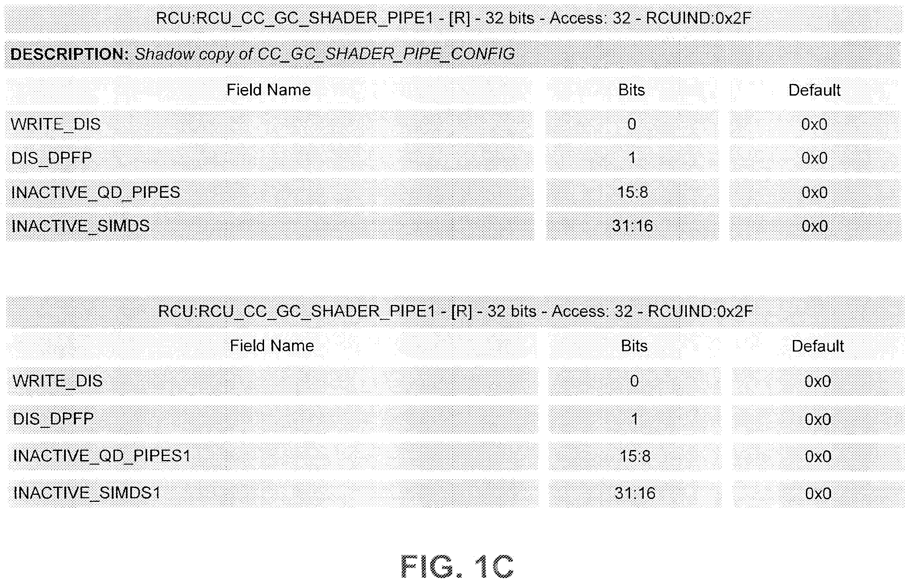

Similarly, "RCU_CG_GC_SHADER_PIPE" and the "RCU_CC_GC_SHADER_PIPE1" register illustrated in FIG. 1C, are shadowed versions of the "CC_GC_SHADER_PIPE_CONFIG" register. These registers are programmed based on a fuse mask or SMC microcode.

The register "GC_USER_SHADER_PIPE_CONFIG," shown in FIG. ID, is programmable by a user to limit a number of operating SIMDs (and/or QPs). This register can be memory mapped and shadowed by a shader engine per an index received from a graphics register bus manager (GRBM).

The register settings of "CC_GC_SHADER_PIPE_CONFIG" (FIG. 1B) are static in nature and are programmed once for a chip. In contrast, settings of the register "GC_USER_SHADER_PIPE_CONFIG" register can be programmed at any time dynamically (i.e., on-the-fly). Embodiments of the invention configure the "GC_USER_SHADER_PIPE_CONFIG" register for dynamic control of SIMDs.

In an embodiment, the resultant ORed value of "CC_GC_SHADER_PIPE_CONFIG" register and the "GC_USER_SHADER_PIPE__CONFIG" register is used by the SPI to determine (on the fly) enabled SIMDs to whom new threads (work) are to be assigned, In an embodiment, all other design blocks in the graphics pipe make use of the "CC_GC_SHADER_PIPE_CONFIG" register to statically disable themselves for inactive SIMDs/QPs. In an embodiment, such design blocks need not review the "GC_USER_SHADER_PIPE_CONFIG" register when such an operation causes an undesirable 'freezing' of the shader pipeline.

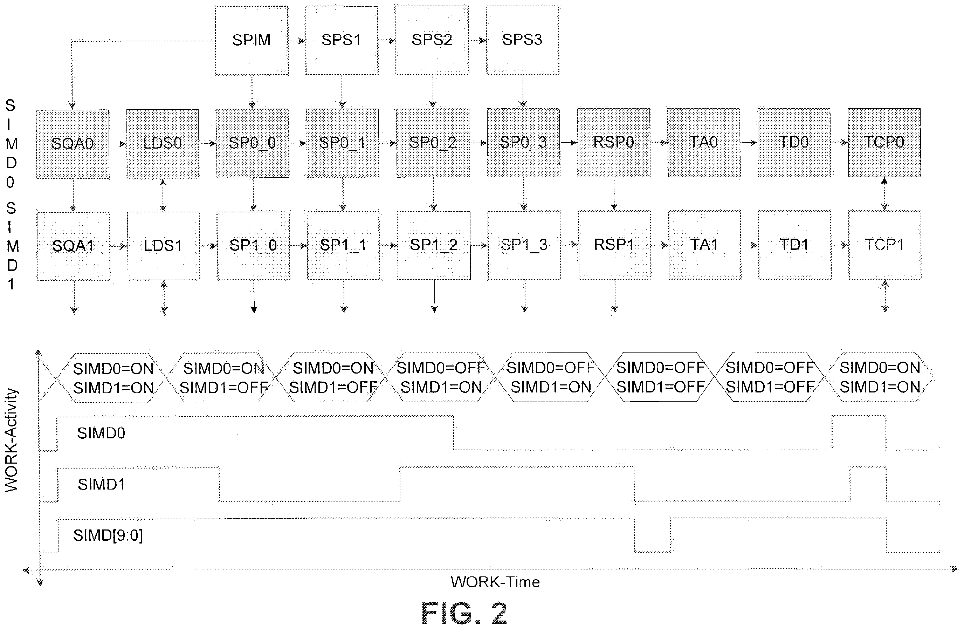

Referring to the exemplary timing diagrams illustrated in FIG. 2, control of SIMDs can be achieved independent of activity in a shader engine. Even if a particular SIMD is busy executing instructions, embodiments can disable that SIMD during its active execution period. For example, referring to FIG. 2, SIMD0 can be disabled during its active execution period.

In an embodiment, not intended to limit the invention, the SPI does not assign work to a disabled (or de-activated) SIMD until the disabled SIMD is re-enabled. The disabled SIMD naturally drains of work threads on completion of current work in it and pending work in a work sequencer pipe. Once empty, dynamic grain clock gating (described further below) can disable clock signals to logic in the disabled SIMD. On reenabling of a disabled SIMD, the SPI again starts submitting new threads (work requests) to the enabled SIMD. SIMD control settings are programmed through GRBM register writes and can be dynamically set by a driver or SMC microcode.

From a system design perspective, SIMDs can be enabled or disabled at any time (i.e., on the fly). From a power savings perspective, a time of switch over from a SIMD enabled to SIMD disabled state can depend on workload pending in the SIMDs pipe. The time needed to enable a disabled SIMD (or vice versa) is as fast as writing a GRBM register when an SPI is ready to allocate threads to that SIMD. As an example, for both cases, the time needed can be a few micro-seconds.

*Exemplary Scenarios Of Operation*

The following are exemplary operational scenarios where embodiments of the invention and dynamic control of SIMDs are used.

### A. Condition Based Control

Dynamic control of SIMDs can be condition dependent. Such exemplary conditions include, but are not limited to:

(1) Temperature Trip: When external sources indicate a higher processor temperature and there is a need for reduction in power consumption (or boost when applicable).
(2) Current Trip: When external sources indicate a higher processor current and there is a need for reduction in power consumption (or boost when applicable).
(3) CAC Management: When an on-chip CAC manager notices increased processing activity and makes a decision to increase performance by enabling more SIMDs or when the on-chip CAC manager notices decreased activity and makes a decision to reduce power by disabling a number of SIMDs without reduction in performance.

### B. Application Based Control

Dynamic control of SIMDs can also be application dependent. Such exemplary applications include those that allow variable utilization to conserve energy. For example, a detected change in user mode of application from more processor intensive application (e.g., 3D graphics processing) to a less intensive application (e.g., DVD playback) can be used for dynamic control of SIMDs, according to the embodiments. User and application input through, for example, user interface (UI) input mechanisms or application programming interfaces (APIs) may also be employed to provide dynamic control of SIMDs. These input mechanisms can be used to set the required power level for a processing application. Such input mechanisms can be enabled through software (e.g., applications or operating systems), firmware, hardware or various combinations thereof.

### C. Work Load Based Control

Dynamic control of SIMDs can be work load dependent. By way of example, dynamic control of SIMDs can be triggered based on one or more of the non-limiting exemplary GPU conditions listed below.

(1) Static screen condition (No Load) (< 5% of TDP)
(2) Idle condition (very Light Load) (< 10% of TDP)
(3) Medium load condition (< 50% of TDP)
(4) Heavy load condition (< 90 % of TDP)

(a) ALU bound
(b) Texture fetch bound
(c) Memory throughput bound

(5) Very heavy load condition (> 90% of TDP)

### D. Requirement Based Control

Dynamic control of SIMDs can be requirement dependent and based on performance needs as well as power needs. A driver monitors GPU TDP and on approaching maximal TDP loads, disables SIMDs to reduce TDP. Such disabling of SIMDs can be accomplished with our without GPU frequency and voltage tuning.
The above exemplary control conditions can be detected and implemented using a driver and/or SMU managed SMC microcode. Embodiments can also allow controls dedicated to self-controlling the number of enabled SIMDs.

*Exemplary Register Settings For Enabling and Disabling SIMDs*

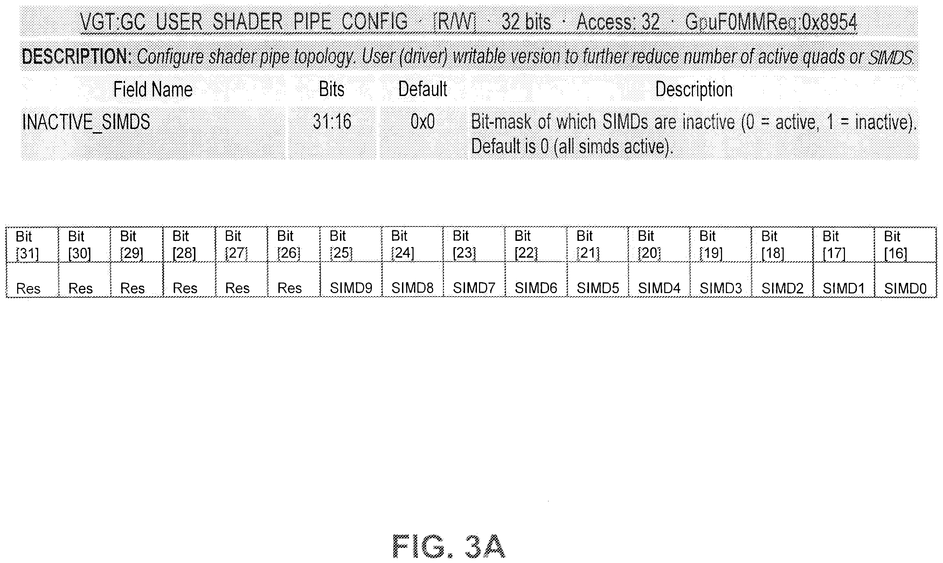

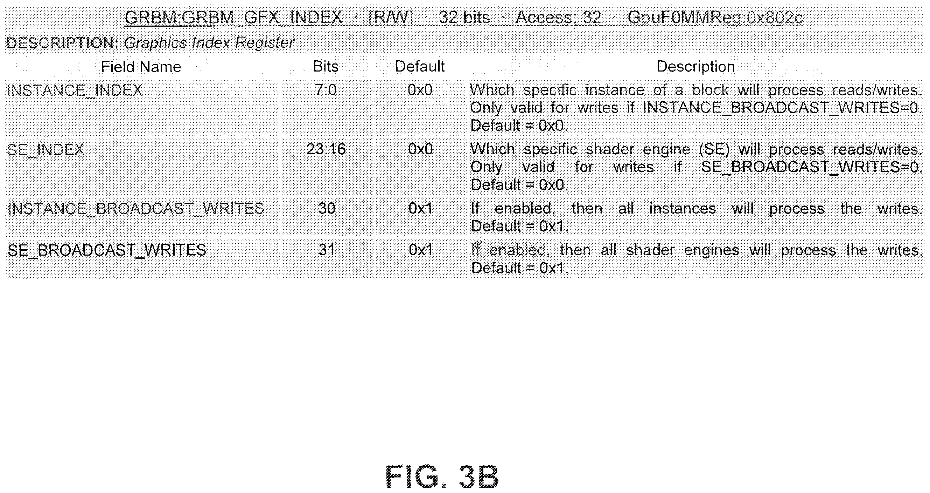

In any of the above mentioned conditional modes (or any other scenarios), a driver can write to bit fields (e.g., bit fields [31:16]) of register "GC_USER_SHADER_PIPE_CONFIG" to disable and enable SIMDs. As shown in FIG. 3A, writing "0" enables the SIMD and writing "1" disables the SIMD.
A graphics processing unit can include two shader engines (e.g., SE0 and SE1). In this scenario, embodiments can enable and disable different SIMDs for these shader engines. This can be achieved by programming the shader engines separately using a GRBM index register as illustrated in FIG. 3B.

Referring to FIG. 3B,

(1) To write to "GC_USER_SHADER_PIPE_CONFIG" of SE0 (i.e., shader engine 0), the following exemplary instructions can be used:

```
mmGRBM_GFX_INDEX = 0x40000000 //point to SE0
mmGC_USER_SHADER_PIPE_CONFIG = 0xFF000000 //disable
//SIMD8 and SIMD9
mmGRBM GFX INDEX = 0xC0000000 //restore the GRBM index
//register to default
```

(2) To write to "GC_USER_SHADER_PIPE_CONFIG" of SE0 (i.e., shader engine 0), the following exemplary instructions can be used:

$$mmGRBM\_GFX\_INDEX = 0x40010000 \qquad //point\ to\ SE1$$

$$mmGC\_USER\_SHADER\_PIPE\_CONFIG = 0xFC030000\ //disable\ SIMD1\ and$$

$$//SIMD0$$

$$mmGRBM\_GFX\_INDEX = 0xC0000000 \qquad //restore\ the\ GRBM\ index$$

$$register\ to\ default$$

(3) To write to "GC_USER_SHADER_PIPE_CONFIG" of both SE0 and SE1 (i.e., shader engine 1), the following exemplary instructions can be used:

```
mmGC_USER_SHADER_PIPE_CONFIG = 0xFC0C0000
//disable SIMD3 & SIMD2 of both SE0 and SE1
```

SIMDs enabled per shader engine (e.g., SE0, SE1, etc.) can be changed on the fly, as long as at least one SIMD is left enabled for each shader engine in each subset to which work is being applied. In other words, for example, if SIMDs are partitioned for different types of work, i.e., two SIMDs per side for tessellation shaders, and the remaining SIMDs shared between vertex and pixel work, one of the two SIMDs for tessellation shaders can be left enabled, and one of the remaining SIMDs for pixel and vertex enabled.

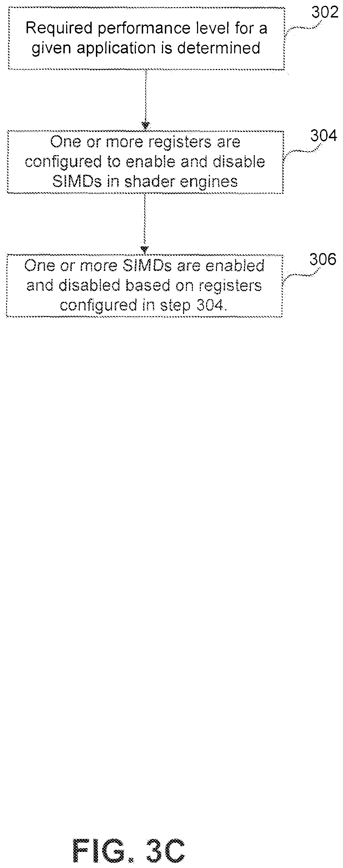

FIG. 3C is a flowchart illustrating an exemplary overall operation, according to an embodiment.

In step 302, a required performance level for a given processing operation is determined. As an example, such a performance level can be application, condition, workload or requirement dependent.

In step 304, one or more registers are configured to enable and disable different SIMDs in shader engines. As an example, such a configuration can be achieved by programming the shader engines separately using a GRBM index register as illustrated in FIG. 3B.

In step 306, one or more registers are enabled or disabled based on the registers configured in step 304.

The following section illustrates exemplary plots that can aid embodiments in making tradeoff decisions between performance and power savings.

### Power Savings Vs Performance Impact

When a SIMD is enabled, it consumes power. With increased processing activity, the SIMD would consume even more power. Conversely, with less activity, the SIMD would consume less power. In an idle state, the SIMD would consume minimal but a measurable amount of power based on the size of the SIMD (e.g., area, cell count etc).

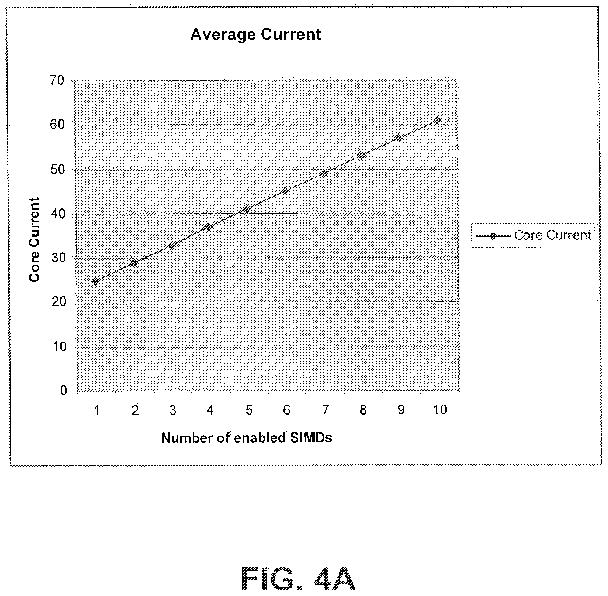

The plot of FIG. 4A shows a linear increase in core power with an increase in the number of enabled SIMDs. The plot depicts a scenario where an application is SIMD bound. In other words, the application is a power intensive application that consumes all available SIMD resources.

A general assumption is that performance of a graphics processing unit would increase with an increase in a number of SIMDs. However, this statement can generally be true for intensive processing tasks. In several scenarios, depending on load conditions, conventional approaches may waste power as they keep all SIMDs enabled even with light processing loads.

The following sections discuss exemplary SIMD performance per watt plots for different types of applications.

(1) Application With an Ideal Load

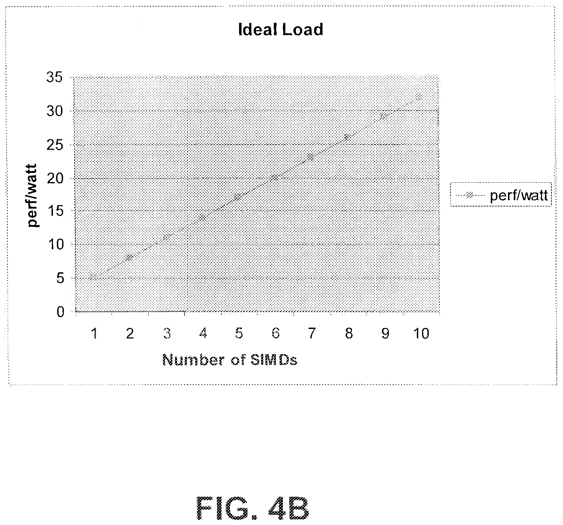

FIG. 4B illustrates a performance per watt plot for an application with an ideal load. As shown in FIG. 4B, as the number of SIMDs increase, the performance per watt of the graphics processing unit increases linearly with constant power consumption per SIMD.

(2) Application with a Balanced Load

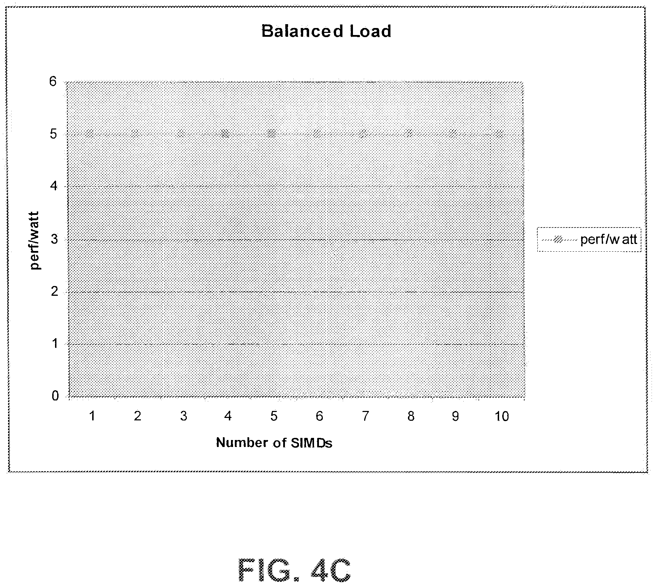

FIG. 4C illustrates a performance per watt plot for an application with a balanced load. As shown in FIG. 4C, as the number of SIMDs increases, performance per watt is sustained.

(3) Application With Realistic Loads

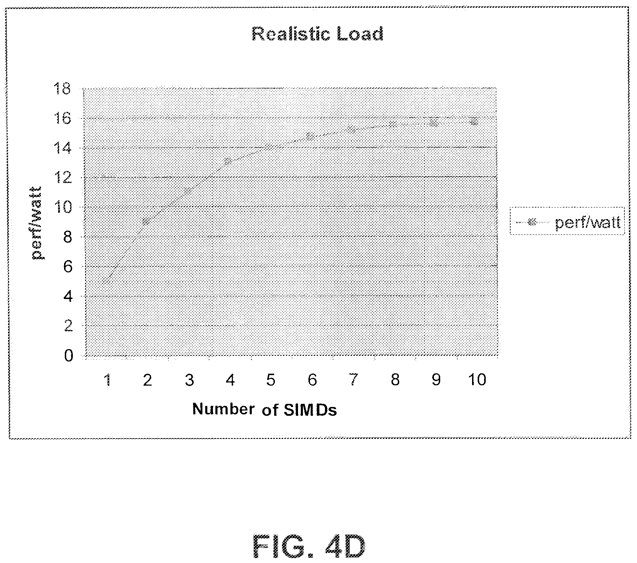

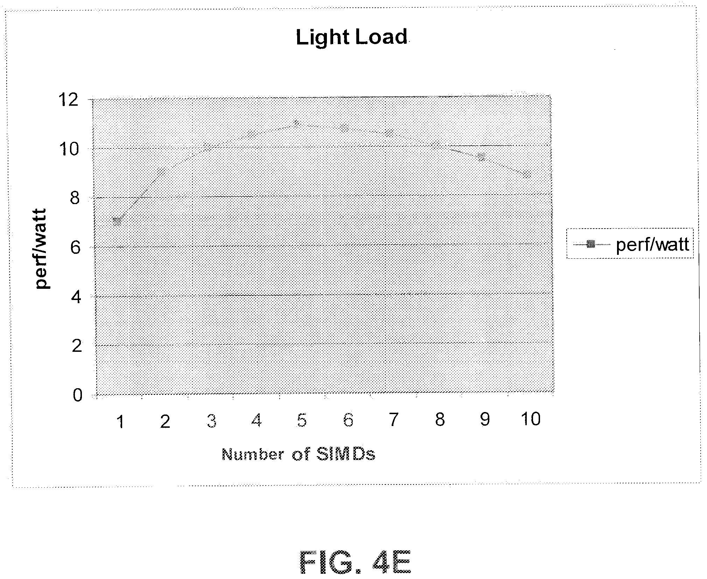

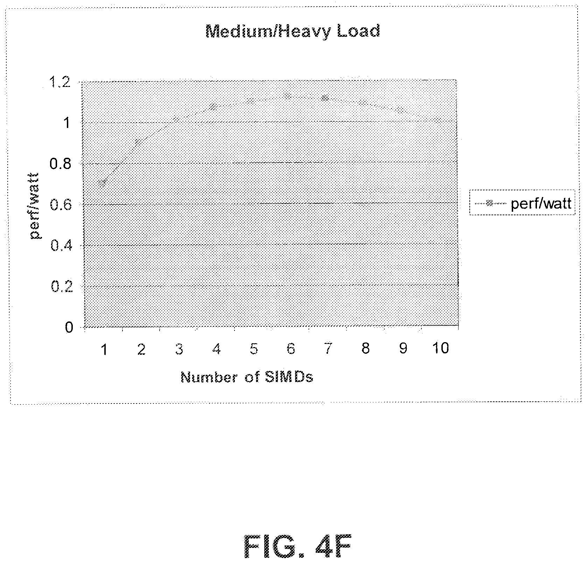

Often, in realistic scenarios, processing loads are such that performance per watt characteristics lie in between the characteristics for an ideal load and characteristics for a balanced load. As shown in FIG. 4D, with increase in SIMDs, performance per watt increases at first but later saturates and either remains at a constant level or may even reduce. When performance per watt reduces, more power is consumed at a relatively lower performance gain. This can be seen from the light and medium/heavy load plots shown in FIGs. 4E and 4F respectively.

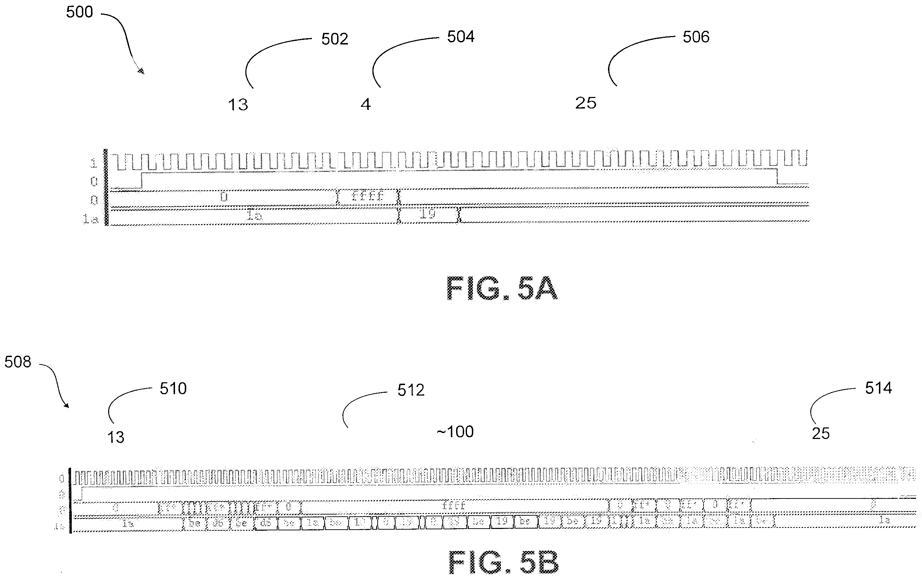

FIG. 5A is a graphical illustration 500 of conventional SIMD load behavior without balancing. Embodiments of the present invention also maximize utilization within individual SIMDs. By maximizing utilization, overhead cycles of the respective SIMDs are reduced, resulting in additional power savings.

When conventional SQ blocks issue instructions to a corresponding SIMD, a busy signal corresponding to that SIMD is transmitted, lasting for typically 13 clock cycles 502. Those 13 cycles are followed by a work cycle 504 of four cycles, and then by an idle or waterfall cycle 506 of 25 cycles. FIG. 5A depicts the example where all the SIMDs in an array (similar to the array 186 of FIG. 1A) are activated, but each SIMD is not fully utilized. In this example, each SIMD will waste 38 overhead cycles (13 + 25) by merely idling or partially water-falling, as shown in FIG. 5A.

The percentage of the overhead cycles, however, is reduced as more instructions are issued to each SIMD, leading to fewer bubbles within the pipeline and hence better utilization. FIG. 5B is an illustration of enhanced utilization in accordance with principles of the present invention.

FIG. 5B is a graphical illustration 508 of SIMD load behavior in accordance with embodiments of the present invention. FIG. 5B depicts the example where only two SIMDs in the array 186 are enabled. In FIG. 5B, however, these two SIMDs are performing the same amount of work that all the available SIMDs were performing in FIG. 5A, above.

In FIG. 5B, under a load scheme that maximizes the utilization of each SIMD, an idle cycle 510 includes 13 cycles. The idle cycle 510 is followed by a work cycle 512 that includes 100 cycles of work. The work cycle 512 is followed by an idle cycle 514 lasting 25 cycles.

In FIG. 5B, 38 overhead cycles are still wasted, but they are only wasted in two SIMDs instead for each of the available SIMDs of that array. Furthermore, the issuance of instructions back to back utilizes waterfall cycles to compact the execution of preceding instructions. These two factors combined greatly improve the effective utilization cycles for active SIMDs. Thus, the utilization arrangement of FIG. 5B performs the same amount of work, provides the same level of performance, but consumes significantly less power. As shown in the exemplary embodiment of FIG. 5B, maximizing the utilization of each enabled SIMD saves power. If the power savings can occur without degrading overall performance, chip efficiency (i.e. performance/watt) will increase.

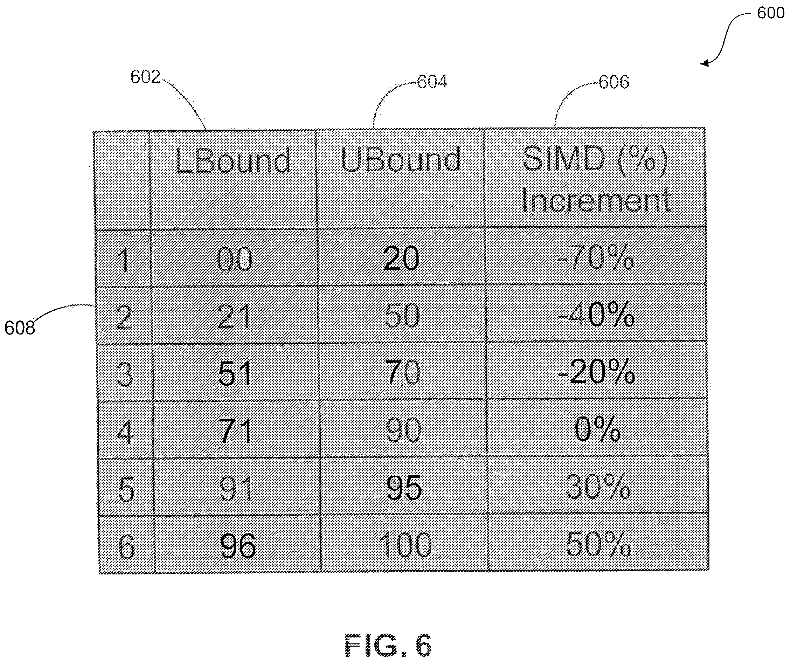

FIG. 6 is an illustration of a simplified programmable lookup table 600 used to assess SIMD utilization in accordance with an embodiment of the present invention. In the embodiments of the present invention, SIMD utilization level is measured by counting instructions issued by the SQ for each SIMD over a predetermined period of time.

Using the exemplary approach of counting instructions, a quantitative measure for a particular SIMD's utilization can be inferred. This process is performed for each of the SIMDs within the array 186 and the results are averaged over the predetermined period of time. Averaging across the enabled SIMDs over the predetermined period gives a fair approximation of the total utilization of each of the enabled SIMDs. The averaged utilization numbers are then compared with values in the lookup table 600. Depending upon the lookup table values, a determination is made to enable additional SIMDs, or disable currently active SIMDs for an optimal utilization level.

Embodiments of the present invention relate to utilization of SIMDs in their present state and also include projections regarding the SIMD's future state. Each SIMD executes multiple types of instructions that are categorized into two parts: (a) texture fetch related and (b) ALU related instructions. Thus, using the techniques of the present invention, a dedicated combination of hardware and firmware controller, monitors and measures execution of ALU instructions and fetch instructions within each SIMD.

For current utilization, information related to ALU and fetch instructions is captured and calculated dynamically in each SIMD on clock by clock basis. That is, over a predetermined period of time, the number of ALU instructions and fetch instructions that are executed in each SIMD are counted. This number is representative of the current utilization/SIMD. While the ALU and fetch instructions are being counted in each SIMD, other activities like wavefront and thread allocations that are occurring in the pipeline, are queued for execution within the SIMD during future cycles.

These wavefront and thread queues, for example, can reside within the SPI modules 102 and/or within the SQs respectively, since both of these modules play a role in buffering workload. As noted above, the SPI modules 102 generate wavefronts based upon shader type. For a given shader type, for example, the SPI modules 102 will indicate that for a particular SIMD, a specific type of wavefront is to be executed. Multiple threads get generated from each wavefront inside SQ.

The information above is compared with entries in the table 600. The table 600, is just an illustration of the possible implementation of the delta table. This table 600, for example, includes utilization lower bounds 602, utilization upper bounds 604, and SIMD % increment (delta) 606. The SIMD % increment 606, for example, can be positive or negative (i.e., indicating to decrement). By using predetermined tabulated values, such as those in the table 600, SIMD utilization is assessed and compared with available ranges. This comparison is then used to determine whether there is a need to enable more SIMDs or disable few of the active SIMDs.

Projections and assessments can also be made regarding future SIMD operations when deciding how many SIMDs are needed to perform work. While the embodiments discussed above focus on ALU and fetch instruction, the present invention is not so limited. Other types of instructions can also be used to determine SIMD utilization, like Vector ALU, Scalar ALU, Texture Fetch, LDS and other miscellaneous.

In the table 600, if at a certain point of runtime, there have been 20 (as an example) SIMDs enabled over the evaluation period, the utilization number comes out to be 30%. This number falls within range 608; FIG-1 has 13 SIMDs per SE and there are 2 SEs, hence there are total of 26 SIMDs in the illustrated system). Hence, the action taken by the controller will be to disable 40% of the enabled SIMDs according the "SIMD (%) Increment" column. As a result 8 SIMDs (20 active SIMDs * 40% reduction) will be shut off to coerce the core to pack more wavefronts into the remaining 12 SIMDs in an effort to attain higher utilization as discussed earlier without any substantial performance impact. The controller will keep on monitoring the system utilization and gracefully adapt the enabled resources to suit the on coming workload. In the above example the controller will push the system to converge at range "4" where each enabled SIMD is (80-90%) utilized. Moreover, by tuning the evaluation period length and the delta table values, the controller action's granularity can be varied to suit the real world applications.

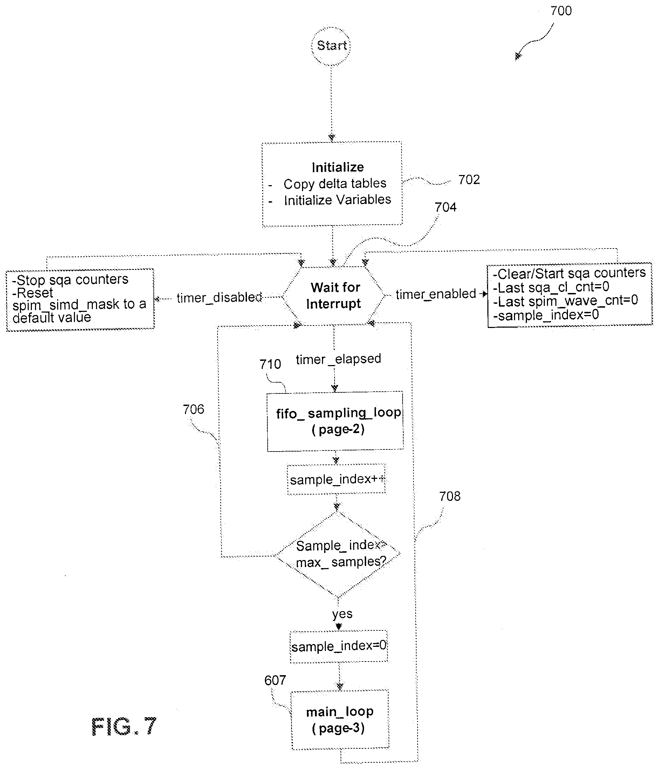

FIG. 7 is an exemplary flowchart of a method 700 implementing SIMD load-balancing, in accordance with an embodiment of the present invention. In FIG. 7, initialization begins at step 702. In step 702, the chip comes out of reset and the table 600 is initialized in accordance with ALU and fetch instruction count values. This can occur, for example, within scratch memory registers of the RLC. The table 600 divides the utilization range of (0-100%) into smaller intervals and specifies the number of SIMDs to be activated or deactivated for a particular utilization interval.

In step 704, an interrupt wait occurs. In an inner loop (i.e., fast loop) 706, the pending wavefronts and thread counts are sampled. This is done through FIFOs within the SPI modules 102 representing pending wavefront counts and the SQ FIFOs representing pending thread counts can be sampled out to extract SIMD future projection data. This data can be analyzed to determine whether trends indicate that SIMD utilization may increase or decrease. A predetermined number of samples, for example 10, can be taken and parameterized. Once the number of samples reaches the predetermined maximum number, the process transitions to a main loop 607. Additional details of an exemplary main loop 607 are illustrated in FIG. 6 and will be discussed below.

Returning to FIG. 7, after the inner loop 706 and the main loop 607 conclude, the method 700 returns along a path 708 to the interrupt step 704. As part of inner loop 706, a sampling step 800 of FIG-8 is executed.

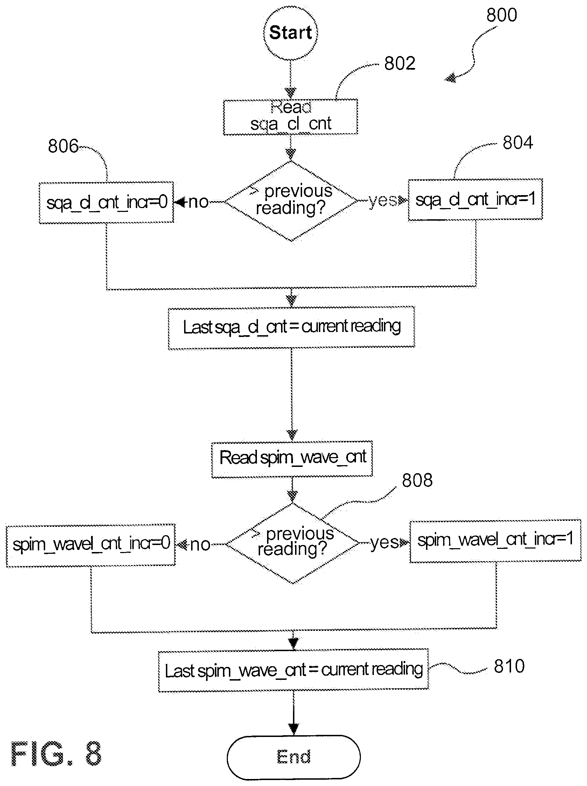

FIG. 8 is a flowchart of an exemplary method 800 for performing FIFO sampling. The FIFO sampling method 800, for example, samples the number of entries in the FIFOs and determines future trends by performing trend data mining noted above. This trend data is used as a secondary factor to assess SIMD utilization. In the method 800, a SQ is read in step 802 to show pending threads for each SIMD within the array 186. This data is compared to determine whether it was more (step 804) or less (step 806) than a previous reading 808, to determine trend. If the trend is up (e.g., by comparing with data from the SPIM 100), an up flag may be set. If smaller, another flag (down) can be set. This data is stored as a last reading 810.

As noted above, trend is one factor used to determine the optimal number SIMDs required for a given work load. For example, if current utilization is zero, but projected future utilization is 30%, 90% of the SIMDs could be deactivated. On the other hand if current utilization is zero, but future trend is indicating 80% more work, then 90% of the current SIMDs cannot be deactivated without compromising performance and hence SIMDs are not reduced even though the current utilization is very low.

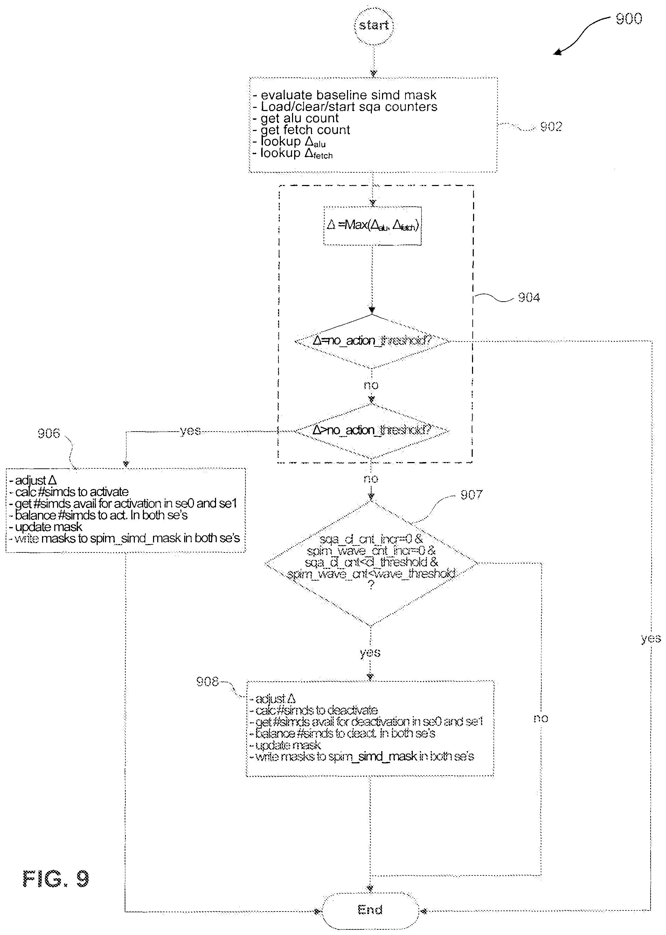

FIG. 9 is a more detailed flowchart of the main loop step 607, shown in FIG. 7. The method 900 gathers data from other steps and uses this data to execute essential decisions with the SIMD utilization determination process. In step 902, among other things, an evaluation is made of the number of SIMDs that are enabled. This number is not fixed and can depend, for example, on harvesting or defect tolerance or deliberate intent of reduced configuration.

More specifically, in step 902, for each of the shader engines 114 and 116, the system establishes a baseline of the SIMDs that are good to be included in the optimization process. If any shader type is limited to a subset of SIMDs rather than all SIMDs, that subset is removed from the baseline SIMD mask and is not considered in the optimization process.

In step 904, the following exemplary operations are performed:

$$\left\{ \begin{array}{ccc} 0 \le \Delta \le 63 & deactivate & \# simds = \dfrac{(64-\Delta)}{64} * active\_simds \\ \Delta = 64 & \text{no action} & \# simds = 0 \\ 65 \le \Delta \le 127 & activate & \# simds = \dfrac{(\Delta-64)}{64} * active\_simds \end{array} \right\}$$

In the step 904 a baseline delta max tells algorithm to enable or disable. Next, the delta value that corresponds to the ALU count, is looked up. The delta value represents the percentage of SIMDs relative to the number of currently active SIMDs that have to be activated/deactivated to balance the load. Delta has a value from 0 - 127. To be conservative, larger delta values can be chosen which promote activating more SIMDs, or as a minimum, deactivating fewer SIMDs.

If delta is above the neutral threshold and more SIMDs are to be activated, the number of SIMDs is calculated and is balanced between the available shader engines. If the delta is below a neutral threshold and more SIMDs are to be deactivated, an extra (secondary) determination is made to ensure the future load has enough SIMDs by checking the workload trend as well as state of pending workload queues. If the wavefront count and clause (threads) count, for example, are showing decreasing or steady trends and are reported as below thresholds, then the deactivation can occur. If either one shows an incrementing trend or is reporting above threshold, then no deactivation is done and is left for the next iteration to clear up.

If delta in step 904 exceeds a predetermined threshold, step 906 is implemented. In step 906, the number of SIMDs to be activated is determined and applied. If delta in step 904 is less that the predetermined threshold, the technique proceeds to step 907. In step 907, a decision is made to decrement number of SIMDs based on factors described before and an action is taken if necessary in step 908. Step 908 is similar to step 906, and will therefore, not be discussed in additional detail.

The LBPW techniques discussed above can also help reduce the negative effects of di/dt. Consequently, noise margins for the voltage regulator can be improved which allows use of low cost regulators. If current changes too fast, frequency will need to be reduced to compensate. Frequency reduction will result in reduced performance. If di/dt is reduced, then frequency can be increased, resulting in increased performance. Reduction in di/dt can also allow reduced VDDC operation resulting in lower dynamic power consumption.

An additional benefit of embodiments of the present invention is the facilitation of maximum performance per watt for a given thermal design power (TDP) plan. The shader compute horse-power can be adjusted as per TDP clamping. One exemplary approach for achieving this includes bounding box. As understood by those of skill in the art, bounding box is a technique used when defining operating conditions of the chips during binning process. A chip, for example, can have different operating configurations resulting in different market SKUs, Each SKU has a bounding box for TDP. All of the different variations in the market SKUs have different TDP values (bounding box for SKU). The LBPW technique of the present invention helps achieve best performance per watt for a given bounding box.

*Savings For Each Mode of Operations*

As can be seen from plots in FIG.s 4A-4F, power savings in accordance with the embodiments would vary from application to application. In many applications, for example, embodiments save power without compromising performance. Such applications include DVD playback applications where SIMD processing load can be light.

As a purely illustrative non-limiting example, on an AMD R770 processor with "eclk=875MHz" and "mclk=90MHz," a per SIMD power consumption is approximately 4.5 watts with heavy loads. With lighter loads, the power consumption would reduce due to clock gating and dynamic SIMD control, in accordance with the embodiments. For example, if it is required to clamp power to certain level then reducing the number of SIMDs at heavy loads would yield significant savings. In an embodiment, applications can also determine a number of SIMDs that are enabled or disabled in a graphics processing unit.

***Dynamic Grain Clock Gating***

As discussed above, in conventional approaches, clocking of all SIMD units in a shader complex is either enabled or disabled simultaneously. In many applications, not all SIMDs are assigned work. However, conventional approaches continue to actively provide clocking signals to such SIMDs. This approach increases power consumption of a graphics processing unit and is inefficient. Conventional approaches can include static clock gating for shader complex blocks in which, when a request is initiated by a SPI, clocks of shader complex blocks are turned-on, one by one, with a di/dt (i.e., rate of change of current) avoidance count delay. Once started, the clocks keep clocking for the entire shader complex even if there is no work for many blocks inside the shader complex. In other words, only a few SIMDs are active at any given time. Once work is completed by the shader complex, the clocks are shut-off automatically using the di/dt avoidance count delay. Thus, in conventional approaches, clock gating is static in nature, and treats the shader complex as a single system.

In contrast to conventional approaches, embodiments of the invention achieve dynamic grain (e.g., medium grain) clock gating of individual SIMDs in a shader complex. Switching power is reduced by shutting down clock trees to unused logic, and by providing a clock on demand mechanism (e.g., a true clock on demand mechanism). In this way, clock gating can be enhanced to save switching power for a duration of time when SIMDs are idle (or assigned no work).

Embodiments of the present invention also include dynamic control of clocks to each SIMD in a shader complex. Each SIMD is treated as shader complex sub-system that manages its own clocks. Dynamic control for each block/tile in an SIMD is also provided. Clocking can start before actual work arrives at SIMDs and can stay enabled until all the work has been completed by the SIMDs.

Various aspects of the embodiments of the invention can be implemented by software, firmware, hardware (or hardware represented by software such as, for example, Verilog or hardware description language instructions), or a combination thereof. Figure 1A is an illustration of an example computer system in which the present invention, or portions thereof, can be implemented as computer-readable code. It should be noted that the simulation, synthesis and/or manufacture of the various embodiments of this invention may be accomplished, in part, through the use of computer readable code, including general programming languages (such as C or C++), hardware description languages (HDL) such as, for example, Verilog HDL, VHDL, Altera HDL (AHDL), or other available programming and/or schematic capture tools (such as circuit capture tools). This computer readable code can be disposed in any known computer usable medium including a semiconductor, magnetic disk, optical disk (such as CDROM, DVD-ROM) and as a computer data signal embodied in a computer usable (e.g., readable) transmission medium (such as a carrier wave or any other medium such as, for example, digital, optical, or analog-based medium). As such, the code can be transmitted over communication networks including the Internet and internets. It is understood that the functions accomplished and/or structure provided by the systems and techniques described above can be represented in a core (such as a GPU core) that is embodied in program code and may be transformed to hardware as part of the production of integrated circuits.

***Conclusion***

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention, Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims.

**Claims**

1. A method performed by a graphics processing unit, GPU, the GPU comprising a shader pipeline having a plurality of single instruction multiple data, SIMD, units, the method, comprising:

   determining a condition related to the power consumption of the GPU, wherein the condition is based on one or more operating conditions including any one or a combination of temperature, current, and processor activity;
   programming a configuration register to disable one or more SIMD units in the shader pipeline in response to the determined condition;
   dynamically enabling and disabling the one or more SIMD units in the shader pipeline based on the determined condition, wherein the dynamically enabling the one or more SIMD units includes dynamically controlling one or more clocks to each of the one or more SIMD units, wherein the dynamically disabling the one or more SIMD units includes dynamic clock gating of SIMD units, wherein the dynamic disabling takes effect after current in-flight work thread requests are serviced by the one or more SIMDs to be disabled; and
   assigning one or more work threads to the one or more enabled SIMD units in the shader pipeline, wherein the work threads are assigned to one or more enabled SIMD units without having to flush the shader pipeline.

2. The method of claim 1, wherein the dynamically disabling comprises disabling the one or more SIMD units during an active execution period and independent of activity in the shader engine of the one or more SIMD units.

3. The method of claim 1, further comprising:

   disabling dispatch of one or more work threads to one or more disabled SIMD units; and
   determining when one or more pending work threads in the one or more disabled SIMD units are cleared.

4. The method of claim 1, wherein the dynamically disabling further comprises disabling one or more clock trees to unused logic in the one or more SIMD units.

5. The method of claim 1, wherein each SIMD unit manages its own clock, wherein dynamically controlling the one or more clocks starts before work threads arrive at the SIMD units to be enabled.

6. A system comprising:

   a graphics processing unit, GPU, comprising a shader pipeline having a plurality of single instruction multiple data, SIMD, units configured to determine a condition related to the power consumption of the GPU, wherein the condition is based on one or more operating conditions including any one or a combination of temperature, current, and processor activity;
   the GPU further configured to program a configuration register to disable one or more SIMD units in the shader pipeline in response to the determined condition;
   the graphics processor configured to dynamically enable and disable the one or more SIMD units in the shader pipeline based on the determined condition, wherein the dynamically enabling the one or more SIMD units includes dynamically controlling one or more clocks to each of the one or more SIMD units, wherein the dynamically disabling the one or more SIMD units includes dynamic clock gating of SIMD units, wherein the dynamic disabling takes effect after current in-flight work thread requests are serviced by the one or more SIMDs to be disabled; and
   the GPU is further configured to assign one or more work threads to the one or more enabled SIMD units in the shader pipeline, wherein the work threads are assigned to one or more enabled SIMD units without having to flush the shader pipeline.

7. The system of claim 6, wherein the GPU is further configured to disable the one or more SIMD units during an active execution period and independent of activity in a shader engine associated with the one or more SIMD units.

8. A non-transitory computer-readable medium that stores instructions adapted to be executed by a processor to perform the method of any of claims 1 to 5.

**Patentansprüche**

1. Verfahren, durchgeführt durch eine Grafikverarbeitungseinheit, (graphics processing unit - GPU), wobei die GPU eine Shader-Pipeline mit einer Vielzahl von Single-Instruction-Multiple-Data-(SIMD-)Einheiten umfasst, wobei das Verfahren Folgendes umfasst:

    Bestimmen eines Zustands in Bezug auf den Stromverbrauch der GPU, wobei der Zustand auf Betriebsbedingungen basiert, die ein beliebiges oder eine Kombination aus Temperatur, Strom und Prozessoraktivität beinhalten;

    Programmieren eines Konfigurationsregisters zum Deaktivieren einer oder mehrerer SIMD-Einheiten in der Shader-Pipeline als Reaktion auf den bestimmten Zustand;

    dynamisches Aktivieren und Deaktivieren der einen oder mehreren SIMD-Einheiten in der Shader-Pipeline basierend auf dem bestimmten Zustand, wobei das dynamische Aktivieren der einen oder mehreren SIMD-Einheiten das dynamische Steuern eines oder mehrerer Takte für jede der einen oder mehreren SIMD-Einheiten beinhaltet, wobei das dynamische Deaktivieren der einen oder mehreren SIMD-Einheiten das dynamische Clock-Gating von SIMD-Einheiten beinhaltet, wobei das dynamische Deaktivieren wirksam wird, nachdem aktuelle aktive Arbeitsthreadanforderungen durch die eine oder mehreren zu deaktivierenden SIMDs bedient werden; und

    Zuweisen eines oder mehrerer Arbeitsthreads zu der einen oder den mehreren aktivierten SIMD-Einheiten in der Shader-Pipeline, wobei die Arbeitsthreads einer oder mehreren aktivierten SIMD-Einheiten zugewiesen werden, ohne dass die Shader-Pipeline geleert werden muss.

2. Verfahren nach Anspruch 1, wobei das dynamische Deaktivieren das Deaktivieren der einen oder mehreren SIMD-Einheiten während eines aktiven Ausführungszeitraums und unabhängig von Aktivität in der Shader-Engine der einen oder mehreren SIMD-Einheiten umfasst.

3. Verfahren nach Anspruch 1, ferner umfassend:

    Deaktivieren des Versands von einem oder mehreren Arbeitsthreads an eine oder mehrere deaktivierte SIMD-Einheiten; und

    Bestimmen, wann ein oder mehrere ausstehende Arbeitsthreads in der einen oder den mehreren deaktivierten SIMD-Einheiten gelöscht werden.

4. Verfahren nach Anspruch 1, wobei das dynamische Deaktivieren ferner das Deaktivieren eines oder mehrerer Taktbäume an ungenutzte Logik in der einen oder den mehreren SIMD-Einheiten umfasst.

5. Verfahren nach Anspruch 1, wobei jede SIMD-Einheit ihren eigenen Takt verwaltet, wobei das dynamische Steuern des einen oder der mehreren Takte beginnt, bevor Arbeitsthreads an den zu aktivierenden SIMD-Einheiten ankommen.

6. System, umfassend:

    eine Grafikverarbeitungseinheit, GPU, umfassend eine Shader-Pipeline, die eine Vielzahl von Single-Instruction-Multiple-Data-(SIMD-)Einheiten aufweist, die konfiguriert sind, um einen Zustand in Bezug auf den Stromverbrauch der GPU zu bestimmen, wobei der Zustand auf einer oder mehreren Betriebsbedingungen basiert, die ein beliebiges oder eine Kombination aus Temperatur, Strom und Prozessoraktivität beinhalten;

    wobei die GPU ferner konfiguriert ist, um ein Konfigurationsregister zu programmieren, um eine oder mehrere SIMD-Einheiten in der Shader-Pipeline als Reaktion auf den bestimmten Zustand zu deaktivieren;

    wobei der Grafikprozessor konfiguriert ist, um die eine oder mehreren SIMD-Einheiten in der Shader-Pipeline basierend auf dem bestimmten Zustand dynamisch zu aktivieren und zu deaktivieren, wobei das dynamische Aktivieren der einen oder mehreren SIMD-Einheiten das dynamische Steuern eines oder mehrerer Takte für jede der einen oder mehreren SIMD-Einheiten beinhaltet, wobei das dynamische Deaktivieren der einen oder mehreren SIMD-Einheiten das dynamische Clock-Gating von SIMD-Einheiten beinhaltet, wobei das dynamische Deaktivieren wirksam wird, nachdem aktuelle aktive Arbeitsthreadanforderungen durch die eine oder mehreren zu deaktivierenden SIMDs bedient werden; und

    wobei die GPU ferner konfiguriert ist, um einen oder mehrere Arbeitsthreads der einen oder den mehreren aktivierten SIMD-Einheiten in der Shader-Pipeline zuzuweisen, wobei die Arbeitsthreads einer oder mehreren aktivierten SIMD-Einheiten zugewiesen werden, ohne dass die Shader-Pipeline geleert werden muss.

7. Verfahren nach Anspruch 6, wobei die GPU ferner konfiguriert ist, um die eine oder mehreren SIMD-Einheiten während eines aktiven Ausführungszeitraums und unabhängig von Aktivität in einer Shader-Engine, die mit der einen oder den mehreren SIMD-Einheiten verbunden ist, zu deaktivieren.

8. Nichtflüchtiges computerlesbares Medium, das Anweisungen speichert, die ausgelegt sind, um durch einen Prozessor ausgeführt zu werden, um das Verfahren nach einem der Ansprüche 1 bis 5 durchzuführen.

**Revendications**

1. Procédé mis en œuvre par une unité de traitement graphique, GPU, la GPU comprenant un pipeline de nuanceur ayant une pluralité d'unités de données multiples à instruction unique, SIMD, le procédé comprenant :

   la détermination d'un état lié à la consommation d'énergie de la GPU, dans lequel l'état est basé sur des états de fonctionnement comportant l'un quelconque ou une combinaison de la température, du courant et de l'activité du processeur ;
   la programmation d'un registre de configuration pour désactiver une ou plusieurs unités SIMD dans le pipeline de nuanceur en réponse à l'état déterminé ;
   l'activation et la désactivation dynamiques de la ou des unités SIMD dans le pipeline de nuanceur sur la base de l'état déterminé, dans lequel l'activation dynamique de la ou des unités SIMD comporte la commande dynamique d'une ou plusieurs horloges pour chacune de la ou des unités SIMD, dans lequel la désactivation dynamique de la ou des unités SIMD comporte le déclenchement d'horloge dynamique des unités SIMD, dans lequel la désactivation dynamique prend effet après que les demandes de fils d'exécution de tâche en vol en cours sont traitées par la ou les SIMD à désactiver ; et
   l'affectation d'un ou de plusieurs fils d'exécution de tâche à la ou aux unités SIMD activées dans le pipeline de nuanceur, les fils d'exécution de tâche étant attribués à une ou plusieurs unités SIMD activées sans avoir à vider le pipeline de nuanceur.

2. Procédé selon la revendication 1, dans lequel la désactivation dynamique comprend la désactivation de la ou des unités SIMD pendant une période d'exécution active et indépendamment de l'activité dans le moteur de nuanceur de la ou des unités SIMD.

3. Procédé selon la revendication 1, comprenant en outre :

   la désactivation de l'envoi d'un ou plusieurs fils d'exécution de tâche à une ou plusieurs unités SIMD désactivées ; et
   la détermination du moment où un ou plusieurs fils d'exécution de tâche en attente dans la ou les unités SIMD désactivées sont effacés.

4. Procédé selon la revendication 1, dans lequel la désactivation dynamique comprend en outre la désactivation d'un ou plusieurs arbres d'horloge dans la logique inutilisée dans la ou les unités SIMD.

5. Procédé selon la revendication 1, dans lequel chaque unité SIMD gère sa propre horloge, dans lequel la commande dynamique de la ou des horloges commence avant que les fils d'exécution de tâche arrivent aux unités SIMD pour être activés.

6. Système comprenant :

   une unité de traitement graphique, GPU, comprenant un pipeline de nuanceur ayant une pluralité d'unités de données multiples à instruction unique, SIMD, configurées pour déterminer un état lié à la consommation d'énergie de la GPU, dans lequel l'état est basé sur un ou plusieurs états de fonctionnement comportant l'un quelconque ou une combinaison de la température, du courant et de l'activité du processeur ;
   la GPU configurée en outre pour programmer un registre de configuration pour désactiver une ou plusieurs unités SIMD dans le pipeline de nuanceur en réponse à l'état déterminé ;
   le processeur graphique configuré pour activer et désactiver dynamiquement la ou les unités SIMD dans le pipeline de nuanceur sur la base de l'état déterminé, dans lequel l'activation dynamique de la ou des unités SIMD comporte la commande dynamique d'une ou plusieurs horloges pour chacune de la ou des unités SIMD, dans lequel la désactivation dynamique de la ou des unités SIMD comporte le déclenchement d'horloge dynamique des unités SIMD, dans lequel la désactivation dynamique prend effet après que les demandes de fils d'exécution de tâche en vol en cours sont traitées par la ou les SIMD à désactiver ; et

la GPU est en outre configurée pour affecter un ou plusieurs fils d'exécution de tâche à la ou aux unités SIMD activées dans le pipeline de nuanceur, les fils d'exécution de tâche étant attribués à une ou plusieurs unités SIMD activées sans avoir à vider le pipeline de nuanceur.

7. Système selon la revendication 6, dans lequel la GPU est en outre configurée pour désactiver la ou les unités SIMD pendant une période d'exécution active et indépendamment de l'activité dans un moteur de nuanceur associé à la ou aux unités SIMD.

8. Support non transitoire lisible par ordinateur qui stocke des instructions adaptées pour être exécutées par un processeur pour mettre en œuvre le procédé selon l'une quelconque des revendications 1 à 5.

FIG. 1A

100

| VGT:CC_GC_SHADER_PIPE_CONFIG · [R/W] · 32 bits · Access: 32 · GpuF0MMReg:0x8950 | | | |
|---|---|---|---|
| DESCRIPTION: *Configure shader pipe topology. Written by RCU from fuse values. Can be written until WRITE_DIS is set.* | | | |
| Field Name | Bits | Default | Description |
| WRITE_DIS | 0 | 0x0 | Field name, position & default-value. Default is 0. |
| DIS_DPFP | 1 | 0x0 | Disable double-precision floating point ops (convert to NOP). 0=enable-dp-fp, 1=disable. |
| INACTIVE_QD_PIPES | 15:8 | 0xFF | Bit-mask of which quad-pipes are inactive (0 = active, 1 = inactive). Quad-pipes can be disabled a column at a time, not different SP's per SIMD. Default is 0 (all pipes active). |
| INACTIVE_SIMDS | 31:16 | 0xFFFF | Bit-mask of which SIMDs are inactive (0 = active, 1 = inactive). Default is 1 before RCU programming (all SIMDs inactive). |

EP 2 593 860 B1

FIG. 1B

| RCU:RCU_CC_GC_SHADER_PIPE1 - [R] - 32 bits - Access: 32 - RCUIND:0x2F | | |
|---|---|---|
| **DESCRIPTION:** *Shadow copy of CC_GC_SHADER_PIPE_CONFIG* | | |
| Field Name | Bits | Default |
| WRITE_DIS | 0 | 0x0 |
| DIS_DPFP | 1 | 0x0 |
| INACTIVE_QD_PIPES | 15:8 | 0x0 |
| INACTIVE_SIMDS | 31:16 | 0x0 |

| RCU:RCU_CC_GC_SHADER_PIPE1 - [R] - 32 bits - Access: 32 - RCUIND:0x2F | | |
|---|---|---|
| Field Name | Bits | Default |
| WRITE_DIS | 0 | 0x0 |
| DIS_DPFP | 1 | 0x0 |
| INACTIVE_QD_PIPES1 | 15:8 | 0x0 |
| INACTIVE_SIMDS1 | 31:16 | 0x0 |

<div align="center">

FIG. 1C

</div>

EP 2 593 860 B1

| VGT_GC_USER_SHADER_PIPE_CONFIG · [R/W] · 32 bits · Access: 32 · GpuF0MMReg:0x8954 | | | |
|---|---|---|---|
| **DESCRIPTION:** *Configure shader pipe topology. User (driver) writable version to further reduce number of active quads or SIMDS.* | | | |
| Field Name | Bits | Default | Description |
| INACTIVE_QD_PIPES | 15:8 | 0x0 | Bit-mask of which quad-pipes are inactive (0 = active, 1 = inactive). Quad-pipes can be disabled a column at a time, not different SP's per SIMD. Default is 0 (4 pipes active). |
| INACTIVE_SIMDS | 31:16 | 0x0 | Bit-mask of which SIMDs are inactive (0 = active, 1 = inactive). Default is 0 (all simds active). |

# FIG. 1D

FIG. 2

## VGT:GC_USER_SHADER_PIPE_CONFIG · [R/W] · 32 bits · Access: 32 · GpuF0MMReg:0x8954

**DESCRIPTION:** *Configure shader pipe topology. User (driver) writable version to further reduce number of active quads or SIMDS.*

| Field Name | Bits | Default | Description |
|---|---|---|---|
| INACTIVE_SIMDS | 31:16 | 0x0 | Bit-mask of which SIMDs are inactive (0 = active, 1 = inactive). Default is 0 (all simds active). |

| Bit [31] | Bit [30] | Bit [29] | Bit [28] | Bit [27] | Bit [26] | Bit [25] | Bit [24] | Bit [23] | Bit [22] | Bit [21] | Bit [20] | Bit [19] | Bit [18] | Bit [17] | Bit [16] |
|---|---|---|---|---|---|---|---|---|---|---|---|---|---|---|---|
| Res | Res | Res | Res | Res | Res | SIMD9 | SIMD8 | SIMD7 | SIMD6 | SIMD5 | SIMD4 | SIMD3 | SIMD2 | SIMD1 | SIMD0 |

FIG. 3A

| GRBM:GRBM_GFX_INDEX · [R/W] · 32 bits · Access: 32 · GpuF0MMReg:0x802c | | | |
|---|---|---|---|
| **DESCRIPTION:** *Graphics Index Register* | | | |
| Field Name | Bits | Default | Description |
| INSTANCE_INDEX | 7:0 | 0x0 | Which specific instance of a block will process reads/writes. Only valid for writes if INSTANCE_BROADCAST_WRITES=0. Default = 0x0. |
| SE_INDEX | 23:16 | 0x0 | Which specific shader engine (SE) will process reads/writes. Only valid for writes if SE_BROADCAST_WRITES=0. Default = 0x0. |
| INSTANCE_BROADCAST_WRITES | 30 | 0x1 | If enabled, then all instances will process the writes. Default = 0x1. |
| SE_BROADCAST_WRITES | 31 | 0x1 | If enabled, then all shader engines will process the writes. Default = 0x1. |

FIG. 3B

Required performance level for a
given application is determined ⌐302

One or more registers are
configured to enable and disable
SIMDs in shader engines ⌐304

One or more SIMDs are enabled
and disabled based on registers
configured in step 304. ⌐306

# FIG. 3C

FIG. 4A

**Ideal Load**

FIG. 4B

FIG. 4C

## Realistic Load

FIG. 4D

## Light Load

FIG. 4E

FIG. 4F

500

502　　　504　　　　　　　　506

13　　　　　4　　　　　　　25

**FIG. 5A**

508

510　　　　　　512　　　　　　　　514

13　　　　　　~100　　　　　　　　25

**FIG. 5B**

EP 2 593 860 B1

|   | LBound | UBound | SIMD (%) Increment |
|---|--------|--------|--------------------|
| 1 | 00 | 20 | -70% |
| 2 | 21 | 50 | -40% |
| 3 | 51 | 70 | -20% |
| 4 | 71 | 90 | 0% |
| 5 | 91 | 95 | 30% |
| 6 | 96 | 100 | 50% |

FIG. 6

700

( Start )

**Initialize**
- Copy delta tables
- Initialize Variables

702

704

**Wait for Interrupt**

timer_disabled

-Stop sqa counters
-Reset spim_simd_mask to a default value

timer_enabled

-Clear/Start sqa counters
-Last sqa_cl_cnt=0
-Last spim_wave_cnt=0
-sample_index=0

710   timer_elapsed

**fifo_ sampling_loop** ( page-2 )

706

sample_index++

Sample_index> max_ samples?

708

yes

sample_index=0

607

**main_loop** ( page-3 )

FIG. 7

800

**Start**

802

Read
sqa_cl_cnt

806

804

sqa_cl_cnt_incr=0 ◄no— previous
reading? —yes► sqa_cl_cnt_incr=1

Last sqa_cl_cnt = current reading

Read spim_wave_cnt

808

spim_wavel_cnt_incr=0 ◄no— previous
reading? —yes► spim_wavel_cnt_incr=1

Last spim_wave_cnt = current reading 810

End

FIG. 8

start

900

- evaluate baseline simd mask
- Load/clear/start sqa counters
- get alu count
- get fetch count
- lookup $\Delta_{alu}$
- lookup $\Delta_{fetch}$

902

$\Delta = Max(\Delta_{alu}, \Delta_{fetch})$

904

$\Delta = no\_action\_threshold$?

no

$\Delta > no\_action\_threshold$?

yes

906

- adjust $\Delta$
- calc #simds to activate
- get #simds avail for activation in se0 and se1
- balance #simds to act. In both se's
- update mask
- write masks to spim_simd_mask in both se's

no

907

sqa_d_cnt_incr=0 &
spim_wave_cnt_incr=0 &
sqa_d_cnt<d_threshold &
spim_wave_cnt<wave_threshold
?

yes

no

yes

908

- adjust $\Delta$
- calc #simds to deactivate
- get #simds avail for deactivation in se0 and se1
- balance #simds to deact. In both se's
- update mask
- write masks to spim_simd_mask in both se's

End

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009091369 A
- WO 2005088443 A